Europäisches Patentamt

European Patent Office

Office européen des brevets

(19)

(11) Veröffentlichungsnummer: **0 149 728**
**B1**

(12) **EUROPÄISCHE PATENTSCHRIFT**

(45) Veröffentlichungstag der Patentschrift: **11.04.90**

(21) Anmeldenummer: **84112579.2**

(22) Anmeldetag: **18.10.84**

(51) Int. Cl.⁵: **B 60 R 22/02,** B 60 R 22/48

(54) **Vorrichtung zum Zuführen der Schlosszunge eines Sicherheitsgurtsystems in eine griffgünstige Position.**

(30) Priorität: **02.12.83 DE 3343619**

(43) Veröffentlichungstag der Anmeldung:
**31.07.85 Patentblatt 85/31**

(45) Bekanntmachung des Hinweises auf die
Patenterteilung:
**11.04.90 Patentblatt 90/15**

(84) Benannte Vertragsstaaten:
**DE FR GB IT SE**

(56) Entgegenhaltungen:
**EP-A-0 102 635**
**DE-A-2 132 709**
**DE-A-3 302 356**
**FR-A-2 225 012**
**FR-A-2 240 747**
**FR-A-2 384 510**

(73) Patentinhaber: **AUDI AG**
**Auto-Union-Strasse 1 Postfach 220**
**D-8070 Ingolstadt (DE)**

(72) Erfinder: **Naumann, Fritz, Dr.**
**Jahnstrasse 29**
**D-8071 Stammham (DE)**
Erfinder: **Haldenwanger, Hans-Günther**
**Behaimstrasse 16a**
**D-8070 Ingolstadt (DE)**

(74) Vertreter: **Le Vrang, Klaus**
**AUDI AG Postfach 220 Patentabteilung I/EQP**
**D-8070 Ingolstadt (DE)**

EP 0 149 728 B1

Courier Press, Leamington Spa, England.

**Beschreibung**

Die Erfindung bezieht sich auf eine Vorrichtung zum Zuführen der Schloßzunge eines Dreipunkt-Sicherheitsgurtes in eine griffgünstige Position, insbesondere für zweitürige Fahrzeuge, wobei die Vorrichtung von einer den Einstieg von Fondpassagieren erleichternden Ruhestellung durch ein mit dem Sicherheitsgurt verbundenes aufblasbares Element selbsttätig in eine ausgefahrene, die Schloßzung zuführende Stellung bewegbar ist.

Eine derartige Vorrichtung ist aus der FR—A—2 225 012 bekannt. Das aufblasbare Element ist dort durch einen Schlauch gebildet, welcher an der Oberseite des den Oberkörper umgreifenden Abschnittes des Dreipunkt-Sicherheitsgurtes befestigt ist. Bei Nichtgebrauch wird dieser Abschnitt des Sicherheitsgurtes und mit ihm der Schlauch an einer Aufwickelvorrichtung im Bereich der Oberkante der Vordersitzlehne aufgerollt. Das Aufwickeln und das Herauspressen der Restluft lassen sich mit herkömmlichen Aufwickelautomaten nicht erreichen.

Aus der DE—A—3 120 843 ist es bekannt, das Gurtband bzw. das Gurtschloß den Benutzer durch einen Zubringer-arm zuzuführen, welcher mittels eines Elektromotors und einer Servoeinrichtung aus einer hinteren Seitenverkleidung herausbewegt wird. Diese bekannte Vorrichtung ist durch die vielen mechanischen Teile sehr aufwendig und benötigt außerdem einen großen Stauraum, der bei vielen Fahrzeugen nicht vorliegt oder zusätzliche Probleme schafft (beispielsweise wenn ein versenkbares hinteres Seitenfenster vorgesehen ist).

Der Erfindung liegt die Aufgabe zugrunde, eine Vorrichtung mit einem aufblasbaren Element zum Zuführen der Schloßzunge eines Dreipunkt-Sicherheitsgurtes so weiterzubilden, daß bei geringem Bauaufwand der herkömmliche Dreipunkt-Sicherheitsgurt mit einem oberen Gurtumlenkpunkt und einem Gurtaufwickelautomaten (Automatikgurt) verwendet werden kann.

Die Aufgabe wird durch die kennzeichnenden Merkmale des Patentanspruchs 1 gelöst.

Dadurch, daß das aufblasbare Element durch einen an der Mittelsänle befestigten Faltenbalg gebildet ist, welcher nur an einer Stelle mit dem Gurtband bzw. dem Gurtschloß verbunden ist, wird der Aufbau des Sicherheitsgurtsystems nicht berührt, so daß diesbezüglich keine Änderungen notwendig sind und an sich jeder Dreipunkt-Sicherheitsgurt mit der neuen Vorrichtung ausgerüstet werden kann. Bei der aus der FR—A—2 225 012 bekannten Vorrichtung ist hingegen das aufblasbare Element über eine große Länge direkt an dem Sicherheitsgurt befestigt. Es ist deshalb eine besondere Aufwickelvorrichtung für den Sicherheitsgurt notwendig. Außerdem ist die Stelle, an der diese Aufwickelvorrichtung montiert werden kann, vorgegeben, so daß sie zweckmäßig nur bei zweisizigen Fahrzeugen einsetzbar ist.

Der Rückzug des Faltenbalges erfolgt nach dem gesteuerten Abschalten der Pumpe durch die Eigensteifigkeit des Faltenbalges und/oder durch den Rückzug verstärkende mechanische Mittel. Dadurch ist es nicht notwendig, zur Einleitung der Rückziehbewegung des Faltenbalges die Luft in demselben durch eine separate Pumpe bzw. durch Umschaltung der vorhandenen Pumpe abzusaugen. Die Steuerung der Pumpe kann dabei in an sich bekannter Weise durch Kontaktschalter, welche auf das Einrasten des Türschlosses oder das Einschalten der Zündung reagieren, erfolgen.

Der Faltenbalg kann in der Ruhestellung an der Innenseite der Mittelsäule eines Personenkraftwagens befestigt werden, so daß der Raum unter dem hinteren Seitenfenster bzw. der Platz hinter den Vordersitzen nicht benötigt wird. Die zum Aufblasen des Faltenbalges notwendige Pumpe kann an beliebiger Stelle im Fahrzeug angeordnet und mit ggf. dort vorhandenen Systemen und Speichern (z. B. Zentralverriegelung) gekoppelt werden. Die Verbindungsleitung zwischen dem Faltenbalg und der Pumpe kann leicht im Mittelholm untergebracht werden.

Der Faltenbalg selbst kann in seiner Ruhestellung in einer Nische in der Mittelsäule untergebracht sein. Beim Aufblasen erstreckt sich der Faltenbalg nach vorne und faßt mit einem an ihn befestigten Greifer das Gurtband und führt es dem Benutzer zu. Nach dem Anlegen des Gurtes (einrasten der Schloßzunge in das zugeordnete Gurtschloß) wird die Pumpe selbsttätig abgeschaltet und der Faltenbalg zieht sich durch seine Eigensteifigkeit zurück. Da der Faltenbalg bei getragenem Gurt bei dieser Bauform nicht in Verbindung mit dem Gurt steht, wird im Gurtsystem keine zusätzliche Reibung verursacht, welche eine stärkere, den Tragekomfort reduzierende Rückzugskraft durch den Aufwickelmechanismus erforderlich macht.

Der Faltenbalg kann auch unmittelbar am oberen Umlenkbeschlag befestigt sein. Diese Anordnung ermöglicht eine nachträgliche oder wahlweise Ausrüstung eines Fahrzeugs mit einer derartigen Vorrichtung, ohne daß ein Bauraum in den Hohlräumen der Karosserie notwendig wird.

In diesem Zusammenhang ist es zweckmäßig, wenn der Faltenbalg gleich mit den Befestigungsmitteln des Umlenkbeschlages gehalten ist, so daß für die Befestigung des Faltenbalges keine zusätzlichen Bauteile notwendig sind.

Aus baulichen Gegebenheiten kann es notwendig sein, daß der Faltenbalg sich nicht geradlinig erstreckt, sondern gekrümmt verläuft, um das Gurtband oder das Gurtschloß in eine griffgünstige Position zu bringen. Dies kann erreicht werden, wenn der Faltenbalg in Richtung auf den Gurtbenutzer zu vorgeformt ist und/oder zu Erzielung der gewünschten Verformungseigenschaften verschiedene Wandstärken aufweist oder aus unterschiedlich steifen Materialien besteht.

Die Ansprüche 3 und 4 kennzeichnen Ausführungsformen, durch welche eine Versteifung des Faltenbalges erreicht und die Gurtführung verbessert wird.

Das dem Umlenkbeschlag abgewandte Ende des Faltenbalges kann vorteilhaft von einem Druckstück aufgenommen werden, welches der Anlage der Schloßzunge beim Ausfahren des Faltenbalges dient und gleichzeitig zur Führung des Sicherheitsgurtes ausgebildet ist.

Mehrere Ausführungsbeispiele der Erfindung sind in der Zeichnung dargestellt und werden nachfolgend näher beschrieben. Es zeigt

Fig. 1 in perspektivischer Ansicht ein als Faltenbalg ausgebildetes Zuführelement für die Schloßzunge eines Sicherheitsgurtsystems,

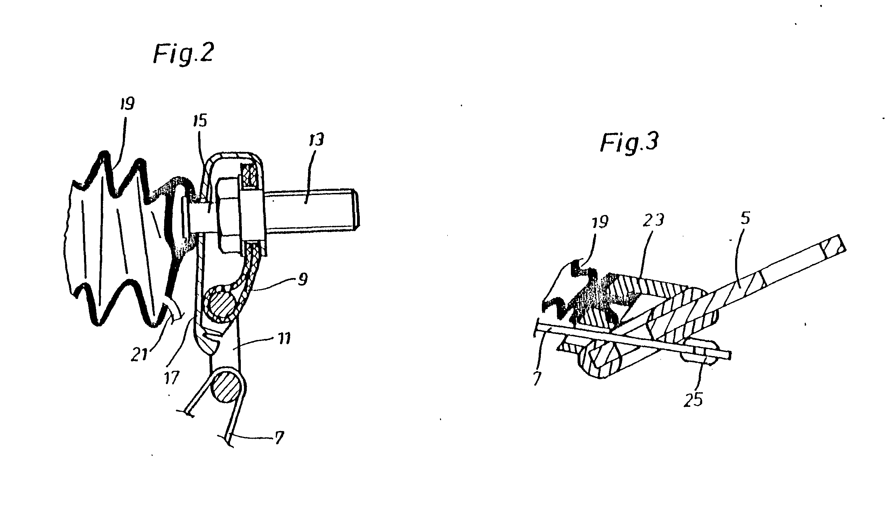

Fig. 2 einen Schnitt entlang der Linien II—II gemäß Fig. 1,

Fig. 3 einen Schnitt entlang der Linien III—III in Fig. 1 und

Fig. 4 ein weiteres Ausführungsbeispiel, wobei das Zuführelement ebenfalls durch einen Faltenbalg gebildet ist.

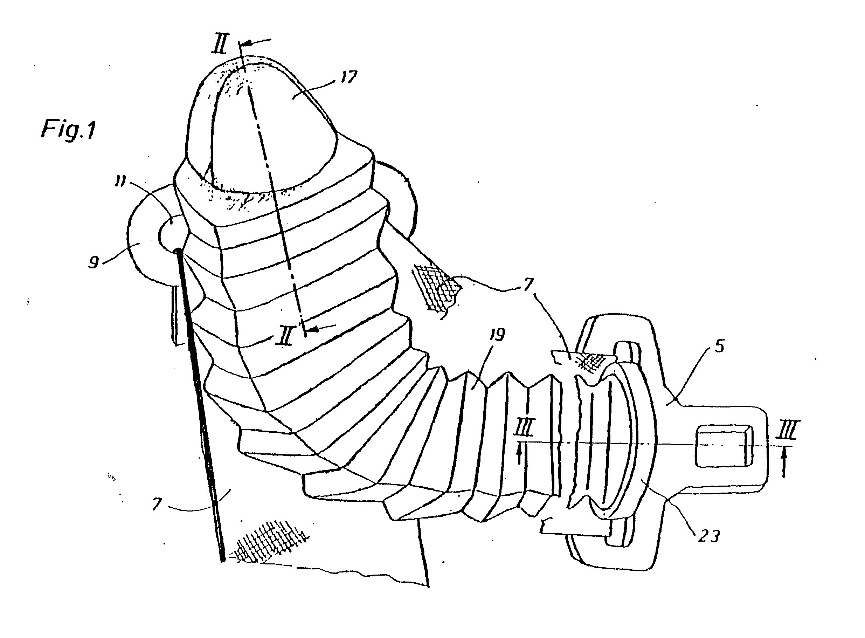

In Fig. 1 ist der Bereich eines oberen Gurtumlenkpunktes für ein Dreipunk-Sicherheitsgurtsystem in einem Personenkraftwagen mit einer Vorrichtung zum Zuführen der Schloßzunge 5 dieses Sicherheitsgurtsystems dargestellt.

Zum Umlenken des Gurtbandes 7 des Sicherheitsgurtsystems ist im oberen Bereich der in der Zeichnung nicht dargestellten Mittelsäule des Personenkraftwagens ein Umlenkbeschlag 9 vorgesehen. Der Umlenkbeschlag 9 trägt eine das Gurtband 7 umschließende Öse 11 und ist mittels einer Schraube 13 am Mittelpfosten befestigt. An die Schraube 13 ist ein Ansatz 15 angeformt, welcher durch eine Verkleidung 17 des Umlenkbeschlages 9 hindurchgeführt ist und das Ende eines Faltenbalges 19 aufnimmt.

Der Faltenbalg 19 dient der Zuführung der Schloßzunge 5 in eine griffgünstige Position. Besonderes Merkmal des Faltenbalges 19 ist der Umstand, daß er von einer zusammengefalteten Ruhestellung in die in Fig. 1 dargestellte Zuführstellung gebracht werden kann. Für diesen Zweck ist eine doppelt wirkende Pumpe vorgesehen (nicht dargestellt), welche über eine Leitung 21 dem Faltenbalg 19 wahlweise Luft zuführt oder im Faltenbalg befindliche Luft absaugt. Der Faltenbalg ist deshalb luftdicht aus einem weichelastischen Material hergestellt. Um zu erreichen, das der Faltenbalg 19 beim Aufblasen eine gewünschte Krümmung erhält, sind die Wände des im Querschnitt etwa rechteckigen Faltenbalges 19 unterschiedlich stark und deshalb auch unterschiedlich steif.

Das der Schloßzunge 5 zugewandte Ende des Faltenbalges 19 ist in einem Druckstück 23 aufgenommen, an welchem die Schloßzunge 5 bei ausgefahrenem Faltenbalg 19 anliegt. Das Druckstück 23 umschließt außerdem teilweise den Abschnitt des Gurtbandes 7, welcher nicht zum Aufwickelautomaten des Sicherheitsgurtsystems führt. Um zu verhindern, das die Schloßzunge 5 verrutschen kann, ist im Gurtband 7 an entsprechender Stelle ein Niet 25 angebracht.

Die Vorrichtung funktioniert in der Weise, daß sich der Faltenbalg 19 zunächst in einer Ruhestellung befindet, in welcher er zusammengefaltet nahe dem Umlenkbeschlag 9 in einer Stellung verweilt, in welcher der Einstieg von Fondpassagieren nicht behindert wird. Nachdem der Gurtbenutzer auf dem Vordersitz Platz genommen und die Türe geschlossen hat, wird über Kontakte im Sitz und an der Fahrzeugtüre eine Pumpe aktiviert, welche über die Leitung 21 den Faltenbalg 19 aufbläst. Dieser gelangt dadurch in seine Wirkstellung. Dabei gleitet das Druckstück 23 am Gurtband 7 entlang und schiebt die Schloßzunge 5 bis zum Anschlag an den Niet 25. In dieser Stellung kann das Gurtschloß 5 vom Benutzer leicht gegriffen und damit das Gurtband weiter ausgezogen werden.

Nach dem Einführen und dem Verrasten der Schloßzunge 5 in dem zugeordnetem Gurtschloß wird über einen entsprechenden Kontakt die Pumpe auf Saugbetrieb umgeschaltet, wodurch das Innere des Faltenbalges 19 mit Unterdruck beaufschlagt wird und sich dieser dadurch in seine zusammengefaltete Ausgangsstellung zurückzieht.

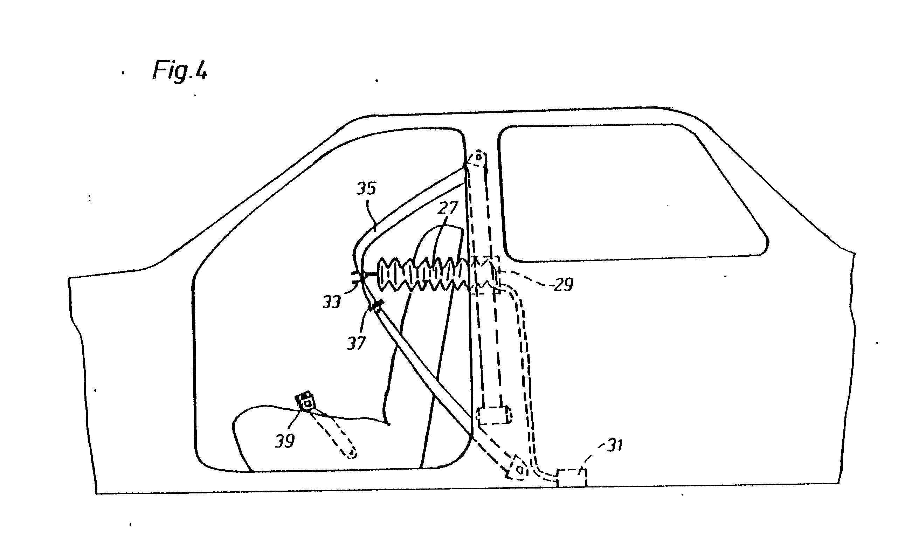

In Fig. 4 ist ein weiteres Ausführungsbeispiel der Erfingung dargestellt. Der darin mit 27 bezeichnete Faltenbalg ist in seiner Ruhestellung in einer Nische 29 der Fahrzeugkarosserie versenkt. Liegen die Voraussetzungen zum Aufblasen des Falkenbalges 27 vor, dann wird durch eine Pumpe 31 der Faltenbalg 27 aufgeblasen. Bei seiner Bewegung nach vorne greift er mit einer ihm befestigten Gabel 33 das Gurtband 35 des Sicherheitsgurtsystems und führt es geradlinig dem Benutzer in eine für ihn günstige Position zu. Nach dem Einführen und dem Verrasten der am Gurtband 35 gehaltenen Schloßzunge 37 mit einer zugeordneten Gurtschloß 39 wird ein Kontakt ausgelöst, welcher die Pumpe 31 auf Saugbetrieb umschaltet. Dadurch zieht sich der Faltenbalg 27 wieder zusammen und kehrt in seine Ausgangsstellung zurück. Somit ist sichergestellt, daß bei angelegtem Sicherheitsgurt das Gurtband nicht in einer die Reibung erhöhenden Verbindung mit der Vorrichtung zum Zuführen steht.

**Patentansprüche**

1. Vorrichtung zum Zuführen der Schloßzunge (5; 37) eines Dreipunkt-Sicherheitsgurtes in eine griffgünstige Position, insbesondere für zweitürige Fahrzeuge, wobei die Vorrichtung von einer den Einstieg von Fondpassagieren erleichternden Ruhestellung durch ein aufblasbares Element selbsttätig in eine ausgefahrene, die Schloßzunge (5; 37) zuführende Stellung bewegbar ist, dadurch gekennzeichnet, daß das aufblasbare Element durch einen an der Mittelsäule des Fahrzeuges befestigten und durch eine Pumpe (31) aufblasbaren Faltenbalg (19; 27) gebildet ist, welcher so ausgestaltet und angeordnet ist, daß er im aufgeblasenen Zustand dem Benutzer die Schloßzunge (5; 37) zuführt, und daß der Rückzug des Faltenbalges (19; 27) nach dem gesteuerten Abschalten der Pumpe (31) durch die Eigensteifigkeit des Faltenbalges (5; 37) und/oder durch den Rückzug verstärkende mechanische Mittel erfolgt.

2. Vorrichtung nach Anspruch 1, dadurch gekennzeichnet, daß der Faltenbalg (19) in Richtung auf den Gurtbenutzer zu vorgeformt ist und/oder zur Erzielung der gewünschten Verformungseigenschaften verschiedene Wandstärken aufweist oder aus unterschiedlich steifen Materialien besteht.

3. Vorrichtung nach Anspruch 1 oder 2, dadurch gekennzeichnet, daß der Faltenbalg (19) zumindest bereichsweise von Stützringen umschlossen ist.

4. Vorrichtung nach Anspruch 3, dadurch gekennzeichnet, daß an wenigstens einem der Stützringe ein Führungselement für den Sicherheitsgurt mit angeformt ist.

5. Vorrichtung nach einem der Ansprüche 1 bis 4, dadurch gekennzeichnet, daß der Faltenbalg (19) mit den Befestigungsmitteln (Schraube 13) des Umlenkbeschlages (9) gehalten ist.

6. Vorrichtung nach einem der Ansprüche 1 bis 5, dadurch gekennzeichnet, daß das dem Umlenkbeschlag (9) abgewandte Ende des Faltenbalges (19) von einem Druckstück (23) aufgenommen ist, welches der Anlage der Schloßzunge (5) dient und gleichzeitig zur Führung des Gurtbandes (7) ausgebildet ist.

**Revendications**

1. Dispositif pour amener le pène (5; 37) d'une ceinture de sécurité en Y dans une position favorable pour être saisie, en particulier pour des voitures à deux portes, le dispositif pouvant être déplacé automatiquement, par un élément gonflable, dans une position déployée qui met le pène (5; 37) à portée de main, à partir d'une position de repos facilitant l'entrée de passagers arrière, caractérisé en ce que l'élément gonflable est constitué par un soufflet (19; 27) fixé au montant central de la voiture et gonflable par une pompe (31), soufflet qui a une forme et une disposition telles qu'à l'état gonflé, il mette le pène (5; 37) à portée de main de l'utilisateur, et en ce que le retrait du soufflet (19; 27) s'effectue, après la coupure commandée de la pompe (31), sous l'effet de la rigidité propre du soufflet (19; 27) et/ou sous l'action de moyens mécaniques qui amplifient le mouvement de retrait.

2. Dispositif selon la revendication 1, caractérisé en ce que le soufflet (19) est préformé en direction de l'utilisateur de la ceinture et/ou présente différentes épaisseurs de paroi ou se compose de matériaux de rigidités différentes en vue de l'obtention des caractéristiques de déformation désirées.

3. Dispositif selon la revendication 1 ou 2, caractérisé en ce que le soufflet (19) est entouré, au moins par zones, de bagues de soutien.

4. Dispositif selon la revendication 3, caractérisé en ce qu'un élément de guidage pour la ceinture de sécurité est formé sur l'une au moins des bagues de soutien.

5. Dispositif selon l'une quelconque des revendications 1 à 4, caractérisé en ce que le soufflet (19) est maintenu avec les moyens de fixation (vis 13) de la pièce de renvoi (9).

6. Dispositif selon l'une quelconque des revendications 1 à 5, caractérisé en ce que l'extrémité du soufflet (19) à l'opposé de la pièce de renvoi (9) est reçue dans une pièce de transmission de poussée (23) qui sert d'appui pour le pène (5) et qui est en même temps réalisée en vue de guidage de la sangle (7) de la ceinture.

**Claims**

1. Device for presenting the buckle latch (5; 37) of a three-point safety belt to a handy position, especially for two-door vehicles, in which the device can be moved automatically by an inflatable element from an initial position which eases the entry of rear-seat passengers to an extended position in which the buckle latch (5; 37) is presented, characterized in that the inflatable element is formed by a bellows (19; 27) which is attached to the centre pillar of the vehicle and can be inflated with a pump (31) and which is shaped and positioned so that in its inflated state it presents the buckle latch (5; 37) to the user and that after the controlled disconnection of the pump the retraction of the bellows (19, 27) takes place by the inherent stiffness of the bellows (5; 37) and/or by mechanical means which reinforce the retraction.

2. Device according to Claim 1, characterized in that the bellows (19) is preformed in a direction towards the belt user and/or has different wall thicknesses or consists of materials of differing stiffnesses in order to achieve the required shape characteristics.

3. Device according to Claim 1 or 2, characterized in that the bellows (19) is surrounded, at least in parts, by supporting rings.

4. Device according to Claim 3, characterized in that a guide element for the safety belt is formed onto at least one of the supporting rings.

5. Device according to one of Claims 1 to 4, characterized in that the bellows (19) is held with the fixture (screw 13) for the return mounting (9).

6. Device according to one of Claims 1 to 5, characterized in that end of the bellows (19) remote from the return mounting (9) is held by a thrust piece (23) which serves to position the buckle latch (5) and at the same time is formed to guide the belt band (7).

Fig.1

EP 0 149 728 B1

*Fig.3*

*Fig.2*

Fig.4